# EUROPÄISCHE PATENTSCHRIFT

(11) **EP 1 719 977 B1**
(45) Veröffentlichungstag und Bekanntmachung des Hinweises auf die Patenterteilung: **09.07.2008**
(21) Anmeldenummer: 05009568.6
(22) Anmeldetag: 02.05.2005
(51) Int. Cl.: G01D 5/14, G01D 5/16, G01R 33/10

(54) **Magnetischer Multipolencoder**
Magnetic multi-pole encoder
Codeur magnétique multipolaire

(43) Veröffentlichungstag der Anmeldung: 08.11.2006
(73) Patentinhaber: Carl Freudenberg KG, 69469 Weinheim (DE)
(72) Erfinder: Schmied, Benno, 67071 Ludwigshafen (DE); König, Stefan, 68549 IIvesheim (DE); Heinrich, Ralf, 69469 Weinheim (DE)

(56) Entgegenhaltungen:
- US-A- 2 848 748
- US-A- 3 320 523
- PATENT ABSTRACTS OF JAPAN Bd. 010, Nr. 093 (P-445), 10. April 1986 (1986-04-10) & JP 60 228975 A (SUWA SEIKOSHA KK), 14. November 1985 (1985-11-14)

## Beschreibung

### Technisches Gebiet

Die Erfindung betrifft einen magnetischen Multipolencoder mit einem Träger und wenigstens einer Encoderspur aus einem magnetisierbaren Material mit einem eingeprägten im Wesentlichen periodischen Magnetisierungsmuster.

### Stand der Technik

Es ist bekannt, zur Erfassung der Drehzahl oder der Winkellage rotierender Maschinenteile so genannte magnetische Multipolencoder einzusetzen, so zum Beispiel zur Ermittelung der jeweils aktuellen Winkellage der Kurbel- und/oder Nockenwelle einer Brennkraftmaschine oder zur Erfassung der Rotationsgeschwindigkeit bei Antiblockier-Radbremssystemen.

Solche Multipolencoder umfassen in der Regel einen im Wesentlichen kreisringförmigen Trägerkörper, beispielsweise aus einem metallischen Werkstoff, der wenigstens an seinem äußeren Umfangsrand mit wenigstens einer Encoderspur aus einem magnetisierbaren Material versehen ist. Die Encoderspur kann beispielsweise aus einem thermoplastischen, mit magnetisiertern Ferrit durchsetztern Material bestehen.

In die Encoderspur ist eine im Wesentlichen periodische, streifenförmige Magnetisierung eingeprägt, bei der sich Nord- und Südpole mit kleinen Teilungsabständen abwechseln. Zur Messung der Winkellage weist der magnetische Multipolencoder in der Regel eine so genannte singuläre Stelle, beispielsweise in Form eines verbreiterten Pols oder einer sonstigen von der Streifenmagnetisierung abweichenden Polanordnung, in seiner Streifenmagnetisierung auf, die als Referenzstelle für die Winkellagenbestimmung dient.

Zur Winkellage- oder Drehzahlmessung einer Welle oder Achse wird der magnetische Multipolencoder üblicherweise auf dieser Welle oder Achse befestigt. Es sind aber auch Anwendungen bekannt, bei welchen der magnetische Multipolencoder an einem Gehäuse befestigt ist, das um eine feststehende Welle oder Achse rotiert. Bei Rotation der Welle oder Achse bzw. des Gehäuses entsteht somit ein sich in Abhängigkeit von den Teilungsabständen der Magnetpole periodisch veränderndes Magnetfeld, das mittels eines magnetischen Sensors, erfasst werden kann. Der Sensor, beispielsweise ein Hall-Sensor oder ein magnetoresistiver Sensor, auch MR- oder GMR(=Giant-MR)-Sensor genannt, wandelt das sich zeitlich verändernde Magnetfeld in ein periodisches elektrisches Signal um, das, wie bereits oben beschrieben, zur Motorsteuerung eingesetzt werden kann.

Zur Überprüfung des Magnetisierungsmusters bei den beschriebenen Encodem, beispielsweise im Anschluss an den Magnetisierungsprozess werden üblicherweise sog. Polarisationsfolien eingesetzt. Es handelt sich hierbei um ein Folienmaterial, in welches magnetische Partikel, beispielsweise Ferritpartikel, eingelassen sind. Die magnetischen Partikel weisen eine gewisse Beweglichkeit in dem Folienmaterial auf, so dass es bei Einwirkung eines äußeren Magnetfeldes auf die Folie zu Anhäufungen von Partikeln in der Nähe von Polübergängen kommt. Das Folienmaterial und die Partikel weisen eine unterschiedliche Färbung auf, so dass die Partikelanhäufungen und damit auch das Magnetisierungsmuster sichtbar werden.

Nachteilig an der Verwendung solcher Polarisationsfolien zur Überprüfung der Magnetisierung von Encodem ist, dass hierfür ein gesonderter Arbeitsschritt erforderlich ist. Weiterhin ist die sichtbar gemachte Magnetisierung nur auf der Folie zu erkennen. Nach dem Entfernen der Folie von dem Encoder ist dessen Magnetisierungszustand nicht mehr erkennbar, was dazu führen kann, dass versehentlich ein nicht magnetisierter Encoder eingebaut wird.

Aus der US-A-2,848,748 ist bekannt, das Magnetisierungsmuster einer magnetischen Kupplung mit am Außenumfang abwechselnd angeordneten Nord- und Südpolen mittels eines zwischen zwei Glasplatten angeordneten Suspensionsfilms sichtbar zu machen. Die Suspension enthält hierzu magnetische Füllstoffe. Die Glasplatte wird zur Sichtbarmachung des Magnetfeldmusters in den Bereich der Kupplung gehalten und anschließend wieder entfernt. Das Magnetfeldmuster ist an der Kupplung selbst nicht sichtbar.

Aus der US-A-3,320,523 ist bekannt, die Magnetspur eines Aufzeichnungsträgers, zum Beispiel eines Magnetbandes, mit einer Beschichtung zu versehen, die ein visuelles Auslesen des Magnetfeldes erlaubt. Die Beschichtung besteht aus einem Harz, der mit Tröpfchen einer Suspension aus einer wässrigen Lösung und magnetischen Partikeln befüllt ist. Die Tröpfchengröße und die Gestalt der Partikel sind dabei so aufeinander abgestimmt, dass es in Abhängigkeit von der Einwirkung eines äußeren Magnetfeldes zu einer Änderung der Transmission oder Reflexion der Beschichtung kommt. Diese Änderung in der Transmission oder Reflexion wird zusammen mit dem Magnetfeld durch den Magnetkopf der Aufzeichnungs- bzw. Wiedergabeeinrichtung ausgelesen. Da die magnetischen Partikel in der wässrigen Lösung frei beweglich sind, dann das visuelle Muster jederzeit durch Einwirken eines stärkeren äußeren Magnetfeldes zerstört werden.

### Darstellung der Erfindung

Aufgabe der Erfindung ist, einen magnetischen Multipolencoder der eingangs genannten Art so weiterzuentwickeln, dass die Überprüfung des Magnetisierungsmusters vereinfacht wird und Verwechslungen magnetisierter Encoders mit nicht-magnetisierten zuverlässig ausgeschlossen werden können.

Diese Aufgabe wird mit einem magnetischen Encoder mit allen Merkmalen des Patentanspruchs 1 gelöst. Bevorzugte Ausführungsformen der Erfindung sind in den Unteransprüchen beschrieben.

Erfindungsgemäß ist vorgesehen, bei einem magnetischen Multipolencoder mit einem Träger und wenigstens einer Encoderspur aus einem magnetisierbaren Material mit einem eingeprägten, im wesentlichen periodischen Magnetisierungsmuster, insbesondere mit einem magnetischen Streifenmuster mit im Wechsel angeordneten Nord- und Südpolen, wie es eingangs beschrieben ist, die Encoderspur wenigstens teilweise mit einer das Magnetisierungsmuster sichtbar machenden Beschichtung versehen. Es hat sich in überraschender Weise gezeigt, dass das Magnetisierungsmuster und damit die Funktion des Encoders durch eine solche Beschichtung nicht beeinträchtigt werden, so dass die Beschichtung dauerhaft auf der Encoderspur verbleiben kann.

Im Gegensatz zur Verwendung der bekannten Polarisationsfolie ist damit eine dauerhafte Anzeige des Magnetisierungszustandes des Encoders möglich. Der versehentliche Einbau eines nicht magnetisierten Encoders in ein Kraftfahrzeug oder in eine Maschine kann sicher ausgeschlossen werden.

In einer bevorzugten Ausführungsform der Erfindung umfasst die Beschichtung einen an sich bekannten Lack mit in dem Lack sichtbaren, magnetisch wirksamen Füllstoffen. Ein solcher Lack kann in einem Spritz-, Streich- oder Druckprozess auf die magnetisierte Encoderspur aufgetragen werden. Die magnetisch wirksamen Füllstoffe sind in dem direkt nach dem Auftrag noch flüssigen Lack weitgehend frei beweglich sind und häufen sie sich entsprechend der Magnetisierung der Encoderspur in den Bereichen der Magnetpolübergänge an. Da die magnetisch wirksamen Füllstoffe in dem Lack optisch sichtbar sind, zeichnet sich somit auf der Oberfläche der Encoderspur ein Abbild des Magnetisierungsmusters ab. Mit dem Trocknen verfestigt sich der Lack mit den Füllstoffen, so dass das Abbild des Magnetisierungsmusters dauerhaft vorhanden bleibt. Da der Lack nach dem Trocknen eine abriebfeste Oberfläche aufweist, ist dieses Abbild auch bei mechanischer Beanspruchung weitgehend geschützt.

Als Lacke sind alle herkömmlichen Lacke geeignet, soweit sie für die jeweilige Anwendung ausreichend temperaturstabil und/oder medienbeständig sind und ihre Binde- und/oder Lösemittel weder die Magnetisierung der Encoderspur beeinträchtigen, noch das Encoderspurmaterial angreifen. Vorzugsweise kommen Klarlacke (farblos oder transparent gefärbt) zum Einsatz, in welchen die magnetisch wirksamen Füllstoffe in einfacher Weise sichtbar sind.

Als magnetisch wirksame Füllstoffe können prinzipiell alle Materialien mit hart- oder weichmagnetischen Eigenschaften zum Einsatz kommen. Hier kommen insbesondere Materialien, die Ni, Co und/oder Fe, wie z.B. SrFe oder NdFeB, enthalten, in Frage. Das magnetisch wirksame Füllmaterial kann auch mehrere unterschiedliche Materialien umfassen. Vorzugsweise kommt als Material Fe zum Einsatz, da es zum einen sehr gute magnetische Eigenschaften aufweist und trotzdem kostengünstig ist, zum anderen, im Gegensatz zu Ni keinerlei Gefahr für die Gesundheit darstellt.

Vorzugsweise werden diese Materialien in Pulverform in den Lack eingebracht, da Pulver sich gut homogen im Lack verteilen lassen. Hierbei haben sich Partikelgrößen im Bereich von 500 nm - 50 µm als besonders geeignet erwiesen.

Die erfindungsgemäßen magnetischen Multipolencoder sind für alle Anwendungen geeignet, für die bisher die herkömmlichen Encoder eingesetzt wurden, so zum Beispiel im Automobilbereich, insbesondere zur Ermittelung der jeweils aktuellen Winkellage der Kurbel- und/oder Nockenwelle einer Brennkraftmaschine oder zur Erfassung der Rotationsgeschwindigkeit bei Getrieben und Antiblockier-Radbremssystemen. Generell können die erfindungsgemäßen Encoder überall da eingesetzt werden, wo die Drehzahl oder die Winkellage rotierender Maschinenteile erfasst werden soll.

Es liegt auf der Hand, dass vorliegende Erfindung ist nicht nur für magnetische Multipolencoder mit kreisringförmiger Magnetspur geeignet ist, sondern auch für solche Encoder, bei denen die Magnetspur nur ein Segment eines Kreisrings auf einem Träger abdeckt.

### Kurzbeschreibung der Zeichnung

Nachfolgend wird die Erfindung anhand der Figur näher erläutert:

Es zeigt:

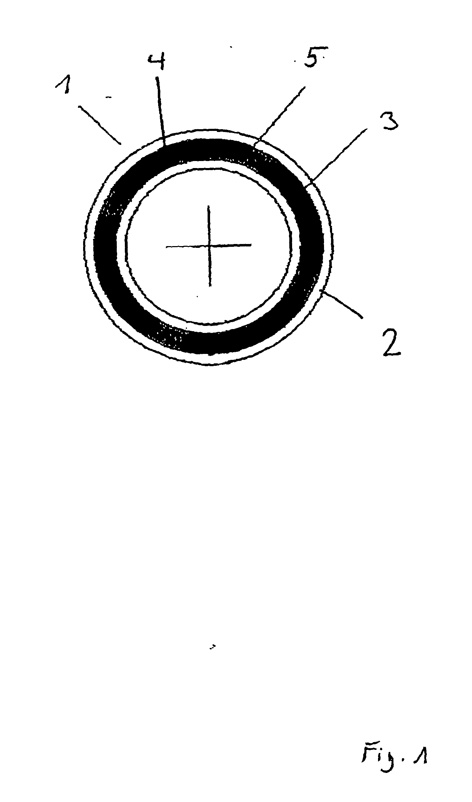

Figur 1: in schematischer Darstellung in Draufsicht einen erfindungsgemäßen magnetischen Multipolencoder mit sichtbar gemachter Polteilung.

Man erkennt in Figur 1 einen magnetischen Multipolencoder 1 mit einem im wesentlichen kreisringförmigen Trägerkörper 2, beispielsweise aus einem metallischen Werkstoff, der wenigstens an seinem äußeren Umfangsrand mit wenigstens einer Encoderspur 3 aus einem magnetisierbaren Material versehen ist. Die Encoderspur 3 kann beispielsweise aus einem thermoplastischen, mit magnetisiertern Ferrit durchsetztem Material bestehen. In die Encoderspur 3 ist eine im Wesentlichen periodische, streifenförmige Magnetisierung eingeprägt, bei der sich Nord- 4 und Südpole 5 mit konstanten Teilungsabständen abwechseln. Der erfindungsgemäße magnetische Multipolencoder ist auf seiner Oberfläche mit einem Lack mit einem magnetischen Pulver als Füllmaterial beschichtet Man erkennt Anhäufungen des Füllmaterials im Bereich der Polübergänge, wodurch das Magnetisierungsmuster gut sichtbar ist. Nach dem Trocknen des Lacks ist das Magnetpulver fest und abriebsicher auf der Oberfläche der Encoderspur fixiert. Das Magnetisierungsabbild bleibt dauerhaft sichtbar, Verwechslungen mit nicht magnetisierten Encodern können weitgehend ausgeschlossen werden.

## Patentansprüche

1. Magnetischer Multipolencoder (1) mit einem Träger (2) und wenigstens einer Encoderspur (3) aus einem magnetisierbaren Material mit einem eingeprägten, im Wesentlichen periodischen Magnetisierungsmuster, **dadurch gekennzeichnet**, die Encoderspur (3) wenigstens teilweise mit einer das Magnetisierungsmuster dauerhaft sichtbar machenden Beschichtung versehen ist, wobei die Beschichtung einen Lack mit in dem Lack sichtbaren, magnetisch wirksamen Füllstoffen umfasst.

2. Magnetischer Multipolencoder nach Anspruch 1, **dadurch gekennzeichnet, dass** der Lack ein Klartack ist.

3. Magnetischer Multipolencoder nach Anspruch 1 oder 2, **dadurch gekennzeichnet, dass** die magnetisch wirksamen Füllstoffe Eisen-Pulver umfassen.

## Claims

1. Magnetic multipole encoder (1) having a support (2) and at least one encoder track (3) made of a magnetizable material with an impressed, essentially periodic magnetization pattern, **characterized in that** at least part of the encoder track (3) is provided with a coating which makes the magnetization pattern permanently visible, the coating comprising, a lacquer with magnetically active fillers which are visible in the lacquer.

2. Magnetic multipole encoder according to Claim 1, **characterized in that** the lacquer is a clear lacquer.

3. Magnetic multipole encoder according to Claim 1 or 2, **characterized in that** the magnetically active fillers comprise iron powder.

## Revendications

1. Codeur magnétique multipolaire (1) comprenant un support (2) et au moins une trace de codeur (3) en matériau aimantable, comprenant un motif d'aimantation imprimé, essentiellement périodique, **caractérisé en ce que** la trace de codeur (3) est prévue au moins en partie avec un revêtement rendant le motif d'aimantation visible de manière durable, le revêtement comprenant un vernis avec des charges à effet magnétique visibles dans le vernis.

2. Codeur magnétique multipolaire selon la revendication 1, **caractérisé en ce que** le vernis est un vernis transparent.

3. Codeur magnétique multipolaire selon la revendication 1 ou 2, **caractérisé en ce que** les charges à effet magnétique comprennent de la poudre de fer.
